# FASCICULE DE BREVET EUROPEEN

(11) **EP 2 302 694 B1**
(45) Date de publication et mention de la délivrance du brevet: **22.08.2012**
(21) Numéro de dépôt: 10305950.7
(22) Date de dépôt: 03.09.2010
(51) Int. Cl.: H01L 31/048, H01L 31/042, F24J 2/52

(54) **Dispositif de solidarisation de panneaux, notamment photovoltaïques avec une toiture de bâtiment**
Vorrichtung zur festen Verbindung von Paneelen, insbesondere Photovoltaik-Sonnenkollektoren, mit dem Dach eines Gebäudes
Device for rigidly connecting panels, in particular photovoltaic panels, to a building roof

(30) Priorité: 25.09.2009 FR 0956653; 10.06.2010 FR 1054613
(43) Date de publication de la demande: 30.03.2011
(73) Titulaire: VOLTABRI, 38121 Reventin-Vaugris (FR)
(72) Inventeur: Giroud, Hubert, 38200, VIENNE (FR)
(74) Mandataire: Vuillermoz, Bruno

(56) Documents cités:
- EP-A1- 2 023 402
- EP-A1- 2 065 944
- DE-A1-102007 036 206
- US-A1- 2004 221 524

## Description

### DOMAINE TECHNIQUE

La présente invention se rapporte au domaine des dispositifs permettant l'intégration et le maintien en position de panneaux, et plus particulièrement de panneaux photovoltaïques sur une toiture de bâtiment. De tels panneaux permettent de réaliser la production d'énergie électrique à partir du rayonnement solaire.

Plus précisément, ce type de dispositif comporte d'une part une pluralité de profilés métalliques agencés dans le sens de la pente et permettant de maintenir les lisières latérales des panneaux, et éventuellement, une pluralité de profilés métalliques agencés dans une direction normale aux premiers profilés, et permettant de maintenir les lisières inférieure et supérieure des panneaux.

### ART ANTERIEUR

De façon générale, on connait différentes sortes de dispositifs permettant de solidariser des panneaux photovoltaïques sur une toiture. On connaît notamment des dispositifs dans lesquels les panneaux sont agencés de manière coplanaire dans un plan parallèle à la pente de la toiture, chaque panneau étant encadré par des rails longitudinaux et des rails transversaux.

Le document EP 2 065 944 décrit par exemple un dispositif de ce type. Outre le fait que ce type de dispositif est difficile à réaliser et nécessite des moyens d'étanchéité relativement complexes pour garantir l'étanchéité à la jonction entre deux panneaux adjacents agencés l'un en dessous de l'autre dans le sens de la pente de la toiture, il ne prévoit aucun système de récupération des condensats.

Le document EP 2 023 402 décrit également un dispositif du type en question. Cependant, il décrit un système mettant en oeuvre des profilés complexes à réaliser nécessitant en outre un ajustement précis des panneaux lors de la pose de ces derniers.

Ainsi, un objectif de l'invention est de réaliser un dispositif de solidarisation des panneaux photovoltaïques avec une toiture qui ne nécessite pas de moyens complexes à réaliser et à positionner sur la toiture.

Un autre objectif de l'invention est de proposer une solution permettant d'assurer, dans le cas particulier des panneaux disposés en clin (ou en tuile), une étanchéité au niveau de la jonction entre deux panneaux adjacents agencés l'un en dessous de l'autre dans le sens de la pente de la toiture.

Un autre objectif de l'invention est de proposer un dispositif de solidarisation qui soit utilisable dans le cas de panneaux disposés en clin (avec chevauchement) ou de façon coplanaire (sans chevauchement), et qui assure une étanchéité optimale. En effet, un défaut d'étanchéité constitue un point particulièrement important, car un tel défaut d'étanchéité ne peut pas être décelé par un rapide examen visuel de la toiture, sans un démontage préalable des panneaux photovoltaïques puisque ces derniers en masquent l'origine.

### EXPOSE DE L'INVENTION

L'invention concerne donc un dispositif de solidarisation de panneaux, notamment photovoltaïques avec une toiture de bâtiment, le dispositif comprenant au moins :
- des profilés longitudinaux solidarisés à la toiture et agencés dans le sens de la pente de la toiture;
- des moyens de serrage aptes à maintenir en position les lisières latérales des panneaux par rapport à la toiture.

Selon l'invention, chacun des profilés longitudinaux présente au moins :
- une section inférieure solidarisée à la toiture, et supportant une surface d'appui des lisières latérales des panneaux ;
- une section supérieure dont les parois longitudinales s'étendent au dessus de la surface d'appui, et sont aptes à empêcher tout glissement latéral des panneaux ; et
- deux goulottes longitudinales disposées latéralement de part et d'autre de la section inférieure, chacune des deux goulottes supportant une rigole longitudinale destinée à la récupération de condensat.

En d'autres termes, chacun des profilés longitudinaux du dispositif de solidarisation de l'invention comprend notamment des sections supérieure et inférieure, deux goulottes et deux rigoles longitudinales.

Avantageusement, la surface d'appui de la section inférieure du profilé est munie latéralement de gorges longitudinales aptes à coopérer avec des éléments intermédiaires d'appui, et typiquement des joints.

La section inférieure comporte une base solidarisée à la toiture, et deux parois longitudinales s'étendant depuis ladite base. Cette section inférieure supporte notamment une surface d'appui des lisières latérales des panneaux, ainsi que deux parois longitudinales qui s'étendent de la surface d'appui pour former la section supérieure. Les parois longitudinales de la section inférieure peuvent en outre s'étendre sur tout ou partie de l'épaisseur des panneaux pour empêcher tout glissement latéral de ces panneaux. Il est possible de prévoir un élément intermédiaire d'appui, tel qu'un joint par exemple, entre les lisières latérales des panneaux et la surface d'appui. Pour ce faire, des gorges longitudinales sont ménagées dans la surface d'appui pour permettre un ancrage de ces éléments intermédiaires.

Les deux goulottes longitudinales sont disposées, de préférence symétriquement, de part et d'autre de la section inférieure. Chaque goulotte supporte une rigole longitudinale. Par exemple, chacune des goulottes longitudinales peut être disposée dans un coin formé par la base et les deux parois longitudinales de la section inférieure, et peut présenter une section transversale en forme de C.

Les rigoles longitudinales, destinées à la récupération de condensat, sont également disposées de part et d'autre de la section inférieure, de préférence symétriquement, et sont chacune délimitée par une paroi longitudinale de la section inférieure, une goulotte, et une ailette s'étendant depuis ladite goulotte.

Ainsi, le dispositif de solidarisation de l'invention a l'avantage de présenter un profilé longitudinal qui soit simple à réaliser, notamment par filière d'aluminium, et à poser, et qui autorise différentes solutions pour maintenir les panneaux par rapport à la toiture, ainsi que pour garantir une étanchéité optimale selon que les panneaux sont disposés en clin ou de façon coplanaire.

Selon un mode de réalisation particulier, le dispositif de solidarisation peut en outre comprendre des membranes d'étanchéité, chacune étant agencée entre deux profilés longitudinaux adjacents, et s'étendant en regard d'une rangée longitudinale de panneaux, les membranes d'étanchéité comportant au niveau de leurs lisières latérales des moyens d'accrochage coopérant avec les goulottes longitudinales.

Ces membranes d'étanchéité sont susceptibles de remplir différentes fonctions. En premier lieu, elles empêchent l'eau de pluie ruisselant sur les panneaux de s'écouler sur la toiture. En outre, elles permettent de garantir l'étanchéité au regard des condensats susceptibles de se former sur la face interne des panneaux photovoltaïques. Par ailleurs, elles sont à même de récupérer des débris résultant par exemple de bris ou de la rupture d'un ou de plusieurs panneaux. En outre, en fonction du ou des matériaux qui les constituent, les membranes peuvent conférer des capacités de résistance au feu à la structure, et notamment répondre aux exigences normées, telles que notamment un classement M0 ou M1. Enfin, lesdites membranes peuvent faire fonction de protection et de résistance contre la chute des opérateurs et autres intervenants susceptibles d'intervenir au niveau desdits panneaux. Ainsi, en cas de bris ou de rupture d'un tel panneau, et corollairement de chute de l'opérateur, ce dernier est « récupéré » par ladite membrane, évitant de fait, des accidents dommageables. Ce faisant, ces membranes confèrent à la structure les qualités requises pour répondre, par exemple, au cahier d'essais 3228 du CSTB (Centre Scientifique et Technique du Bâtiment).

Les lisières supérieure et inférieure des membranes peuvent être rabattues sur une éventuelle toile de rive pour assurer une étanchéité supplémentaire. Les moyens d'accrochage sont par exemple constitués par des baguettes de forme complémentaire à la goulotte, qui peuvent être introduites dans une goulotte par coulissement.

Selon un mode de réalisation particulier de l'invention, la base du dispositif de solidarisation de l'invention est munie de goulottes, aptes à coopérer avec des moyens de fixation sur la toiture pourvus d'un jonc de forme complémentaire auxdites goulottes.

Ce faisant, le disposition dans son ensemble est susceptible, avant fixation définitive, de pivoter autour de l'axe de rotation défini par le jonc, pour permettre la mise en place de la membrane, et après mise en place et fixation de la base sur la toiture, d'assurer la tension effective de la membrane.

Selon un mode de réalisation particulier, le dispositif de solidarisation peut en outre comprendre des joints disposés à la jonction entre les panneaux, et des lèvres longitudinales qui s'étendent depuis les lisières latérales de ces joints jusqu'à l'intérieur des rigoles afin de guider le condensat dans lesdites rigoles. Par exemple, les extrémités libres des rigoles peuvent être pourvues de rebords permettant de mieux soutenir lesdites lèvres.

Selon un mode de réalisation, chacun des moyens de serrage comprend au moins un plot muni d'une encoche disposée à cheval sur la section supérieure, ledit plot étant en outre muni d'un orifice traversant coopérant avec une rondelle et une vis pour empêcher le soulèvement des lisières des panneaux.

Avantageusement, certains des plots comportent des surfaces transversales d'arrêt réparties de part et d'autre de l'encoche, lesdites surfaces d'arrêt étant aptes à supporter les lisières inférieures des panneaux pour empêcher tout glissement longitudinal de ces panneaux.

Ce mode de réalisation est particulièrement approprié pour des panneaux photovoltaïques de type module photovoltaïque monocristallin composé d'une pluralité de cellules photovoltaïques en silicium monocristallin connectées en série et maintenues dans un cadre.

Dans ce cas particulier, les panneaux ne sont pas agencés en clin, et les lisières inférieures des modules photovoltaïques viennent en butée sur les surfaces d'arrêt des plots. Les rondelles permettent d'éviter tout soulèvement des lisières des panneaux et l'ensemble plots, vis et rondelles permet de maintenir les panneaux par rapport à la toiture. La section supérieure est de préférence percée de plusieurs orifices traversants pour permettre le passage des vis et ainsi solidariser les moyens de serrage au profilé longitudinal.

Selon un autre mode de réalisation, le dispositif de solidarisation peut en outre comprendre des joints d'appui formant éléments intermédiaires d'appui, disposés entre les panneaux et les gorges longitudinales de la surface d'appui, chacun des joints d'appui présentant une excroissance longitudinale coopérant avec l'une desdites gorges longitudinales de ladite surface d'appui.

De préférence, le dispositif de solidarisation comprend en outre des cavaliers formant moyens de serrage, de forme complémentaire à la section latérale de la section supérieure, et disposés à cheval sur ladite section supérieure, chacun des cavaliers présentant deux pattes latérales pour empêcher le soulèvement des lisières latérales de deux panneaux adjacents disposés de part et d'autre du profilé longitudinal. Chacun des cavaliers présentant en outre un orifice traversant coopérant avec une vis de manière à solidariser le cavalier sur la section supérieure.

De préférence, le dispositif de solidarisation peut en outre comprendre des sabots de séparation disposés à cheval sur la section supérieure, chacun des sabots de séparation présentant des ailettes latérales sur lesquelles viennent buter les lisières inférieures des panneaux.

En d'autres termes, dans cet autre mode de réalisation, les panneaux sont agencés de façon coplanaire, et les lisières inférieures des panneaux viennent en butée sur les ailettes latérales des sabots de séparation. Ces ailettes latérales créent ainsi un espace entre la lisière inférieure d'un panneau et la lisière supérieure d'un autre panneau adjacent. Les pattes latérales des cavaliers évitent le soulèvement des lisières latérales des panneaux et participent au maintien de ces panneaux sur les profilés longitudinaux. La section supérieure peut être percée de plusieurs orifices traversants pour permettre le passage des vis et ainsi solidariser les moyens de serrage au profilé longitudinal.

Selon un autre mode de réalisation, le dispositif de solidarisation peut en outre comprendre des joints inférieurs positionnés entre les profilés longitudinaux et les panneaux, et présentant chacun une section longitudinale de forme trapézoïdale, ces joints inférieurs permettant de réaliser un recouvrement partiel des panneaux entre eux dans le sens de la pente de la toiture.

Autrement dit, dans cet autre mode de réalisation, le dispositif comporte une pluralité de joints inférieurs permettant de modifier l'inclinaison des panneaux par rapport à la pente de la toiture de façon à réaliser le recouvrement partiel de la lisière supérieure de chaque panneau par la lisière inférieure du panneau adjacent agencé au dessus du premier panneau considéré. Ainsi, les panneaux photovoltaïques sont agencés entre eux à l'instar des tuiles se chevauchant partiellement, et l'eau peut ruisseler à leur surface sans nécessiter des moyens d'étanchéité complexes au niveau de leurs lisières inférieure et supérieure.

Avantageusement, le dispositif de solidarisation comprend en outre des joints supérieurs présentant chacun une section longitudinale de forme trapézoïdale et une inclinaison égale à celle des joints inférieurs. De tels joints supérieurs sont positionnés entre les panneaux et des profilés de serrage formant moyens de serrage, et sont agencés sur les panneaux avec une orientation opposée à celle des joints inférieurs afin de permettre l'utilisation des profilés de serrage de forme plane pour maintenir en position deux panneaux adjacents agencés l'un en dessous de l'autre.

En d'autres termes, les joints supérieurs permettent de rattraper l'inclinaison des panneaux photovoltaïques par rapport à l'orientation de la pente de la toiture et de définir une bande plane continue s'étendant au dessus des différents panneaux pour permettre l'utilisation d'un profilé de serrage continu s'étendant sur tout ou partie des panneaux dans le sens de la pente de la toiture. De plus, cet agencement permet de positionner parallèlement le profilé de serrage par rapport au profilé longitudinal en regard et facilite ainsi leur solidarisation.

Par exemple, les joints inférieurs et supérieurs présentent une section transversale de forme circulaire. Les joints inférieur et supérieur présentent ainsi une forme de type conique.

Les joints inférieurs et supérieurs peuvent être identiques. En effet, une telle similitude permet de réduire le coût de fabrication de ces profilés puisqu'ils sont alors fabriqués dans une quantité double. Une telle caractéristique permet également de simplifier le stockage des joints en vue de la fabrication du dispositif de solidarisation et permet d'éviter des erreurs de positionnement des joints lors de la fabrication du dispositif.

Avantageusement, les joints inférieurs et/ou supérieurs présentent chacun une excroissance longitudinale coopérant avec les gorges longitudinales ménagées dans la surface d'appui et/ou avec des gorges de forme complémentaire ménagée dans les profilés de serrage.

De cette manière, les joints inférieurs sont solidaires des profilés longitudinaux et les joints supérieurs sont solidaires des profilés de serrage. Ils peuvent être notamment introduits en faisant coulisser les excroissances à l'intérieur des gorges, mais en pratique, les excroissances longitudinales peuvent comporter des moyens d'encliquetage coopérant avec les gorges. Ainsi, dans ce cas, les joints sont positionnés en regard des gorges et une pression exercée à leur surface permet de déformer les excroissances qui, une fois à l'intérieur des gorges, reprennent leur forme initiale empêchant une sortie accidentelle ou intempestive des joints inférieurs ou supérieurs.

Selon un mode de réalisation particulier, le dispositif de solidarisation peut comporter des capots longilignes destinés à masquer des éléments mécaniques de solidarisation des profilés de serrage avec les profilés longitudinaux. De tels capots garantissent également l'étanchéité au niveau des éléments mécaniques de solidarisation et permettent de générer un effet visuel de continuité sur toute la longueur des profilés de serrage.

Par ailleurs, les capots longilignes peuvent comporter chacun des moyens d'encliquetage coopérant avec une gorge ménagée dans les profilés de serrage. Autrement dit, de même que les joints inférieurs et supérieurs, les capots longilignes peuvent être solidarisés avec les profilés de serrage en exerçant une pression à leur surface, ayant pour effet de déformer deux pattes émergeant sensiblement perpendiculairement d'une zone bombée du capot longiligne. Ces pattes sont aptes à se rapprocher l'une de l'autre puis à s'écarter une fois à l'intérieur de la gorge du profilé de serrage.

En pratique, le dispositif de solidarisation peut comprendre des membranes souples agencées entre deux profilés longitudinaux adjacents, et en regard d'un joint de dilation séparant deux éléments de la toiture sur laquelle le dispositif est rapporté.

Ces membranes souples permettent ainsi d'assurer une étanchéité et de compenser les variations de position, notamment dues aux dilatations thermiques des matériaux, entre deux groupes de panneaux photovoltaïques positionnés respectivement au dessus de deux éléments de la toiture et notamment de deux éléments d'une charpente métallique. De telles membranes souples peuvent être réalisées au moyen de bande de caoutchouc.

La membrane souple est positionnée à l'intérieur des profilés en procédant à son introduction par coulissement et en effectuant un effort de traction au niveau de l'une des extrémités de la membrane souple. Les profilés sont quant à eux maintenus en position par rapport aux profilés longitudinaux au moyen d'un joint de raccordement et d'un profilé de serrage dont la section est constante sur toute leur longueur. Par ailleurs, la partie inférieure du profilé peut comporter une gorge coopérant avec une excroissance du profilé longitudinal de manière à supprimer deux degrés de mobilité en translation dans un plan perpendiculaire aux profilés longitudinaux. Le troisième degré de mobilité en translation selon la direction longitudinale des profilés est quant à lui supprimé grâce à la force de frottement du joint de raccordement sur le profilé de raccordement.

### DESCRIPTION SOMMAIRE DES FIGURES

L'invention sera bien comprise à la lecture de la description qui va suivre, donnée uniquement à titre d'exemple et réalisée en se référant aux dessins annexés, parmi lesquels :
- la figure 1 est une vue schématique de la section transversale d'un profilé longitudinal d'un dispositif de solidarisation conforme à l'invention ;
- la figure 2 est une vue partielle et en perspective d'un dispositif de solidarisation selon un mode de réalisation de l'invention;
- la figure 3 est une vue schématique partielle d'une coupe longitudinale du dispositif de solidarisation de la figure 2 ;
- la figure 4 est une vue schématique partielle d'une coupe transversale du dispositif de solidarisation de la figure 2 ;
- la figure 5 est une vue partielle et en perspective d'un dispositif de solidarisation selon un autre mode de réalisation de l'invention;
- la figure 6 est une vue schématique partielle d'une coupe longitudinale du dispositif de solidarisation de la figure 5 ;
- la figure 7 est une vue schématique partielle d'une coupe transversale du dispositif de solidarisation de la figure 5 ;
- la figure 8 est une vue éclatée partielle et en perspective d'un dispositif de solidarisation selon un autre mode de réalisation de l'invention;
- la figure 9 est une vue schématique partielle en section du dispositif de solidarisation de la figure 8 ;
- les figures 10 et 11 sont des vues schématiques partielles en section, respectivement selon les lignes I-I et II-II de la figure 8, illustrant un point haut et un point bas de la solidarisation des panneaux photovoltaïques ;
- la figure 12 est une vue schématique en section partielle de la jonction entre deux panneaux adjacents situés l'un au dessus de l'autre, selon le mode de réalisation de la figure 8 ;
- la figure 13 est une vue schématique partielle d'une coupe transversale du dispositif de solidarisation selon la figure 8 muni de lèvres de récupération de condensat ;
- la figure 14 est une représentation schématique en section d'une autre forme de réalisation du dispositif de l'invention, dont la figure 15 est une vue en perspective,
- la figure 16 est une représentation schématique en perspective d'un moyen de fixation du dispositif de fixation ;
- les figures 17a, 17b, et 17c illustrent la mise en oeuvre du dispositif des figures 14 et 15.

### MODE DE REALISATION DE L'INVENTION

Le dispositif **1** de solidarisation de l'invention permet de maintenir en position des panneaux **2, 20** photovoltaïques par rapport à une toiture **3** de toiture, et comprend notamment des profilés longitudinaux **4** et éventuellement transversaux, qui peuvent être métalliques, ainsi que des moyens de serrage (vis ou crapottage pour assurer les phénomènes de dilatation différentielle des matériaux). Les profilés longitudinaux **4** sont solidarisés à la toiture **3** et agencés dans le sens de la pente de la toiture **3,** les profilés transversaux, lorsqu'ils sont mis en oeuvre, sont solidarisés aux profilés longitudinaux **4** et agencés perpendiculairement aux profilés longitudinaux **4,** et les moyens de serrage permettent de maintenir en position les lisières latérales des panneaux **2, 20** par rapport à la toiture **3.**

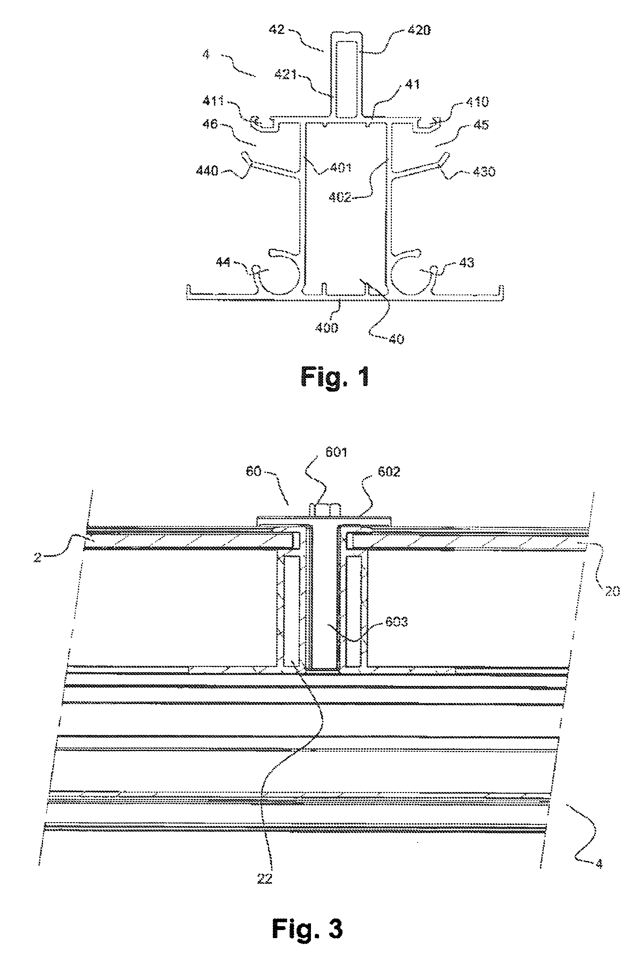

En référence à la figure 1, chacun des profilés longitudinaux **4** comporte notamment une section supérieure **42** et inférieure **40,** deux goulottes **43, 44** et deux rigoles **45, 46.**

La section inférieure **40** présente une base **400** solidarisée à la toiture **3,** et deux parois longitudinales **401, 402** s'étendant depuis ladite base **400.** La section inférieure **40** supporte une surface d'appui **41** des lisières latérales des panneaux **2, 20** au-dessus de laquelle s'étendent deux parois longitudinales **420, 421** pour former la section supérieure **42.** Pour empêcher tout glissement latéral des panneaux **2, 20,** les deux parois longitudinales **420, 421** de la section supérieure **42** s'étendent sur tout ou partie de l'épaisseur de ces panneaux **2, 20.** Des gorges longitudinales **410, 411** sont ménagées au niveau des extrémités latérales de la surface d'appui **41,** et peuvent notamment servir à ancrer des éléments intermédiaires d'appui sur le profilé longitudinal **4,** ces éléments intermédiaires d'appui étant par exemple des joints.

Les deux goulottes **43, 44** longitudinales sont disposées symétriquement, de part et d'autre de la section inférieure **40,** chacune supportant une rigole longitudinale **45, 46.** Dans une réalisation particulière, chacune des goulottes **43, 44** présente une section transversale en forme de C, et est disposée au niveau d'un coin formé par la base **400** et les deux parois longitudinales **401, 402** de la section inférieure **40.** Les goulottes **43, 44** sont notamment destinées à coopérer avec des moyens d'accrochage **70** d'une membrane d'étanchéité **7**.

Les deux rigoles **45, 46,** également disposées symétriquement de part et d'autre de la section inférieure **40,** sont chacune délimitée par une paroi longitudinale **401, 402** de la section inférieure **40,** la goulotte **43, 44** associée, et une ailette **430, 440** s'étendant depuis ladite goulotte **43, 44.**

Dans un mode de réalisation particulier de l'invention, chaque panneau **2, 20** photovoltaïque peut être un module photovoltaïque monocristallin composé d'une pluralité de cellules **21** photovoltaïques en silicium monocristallin connectées en série et maintenues dans un cadre **22.**

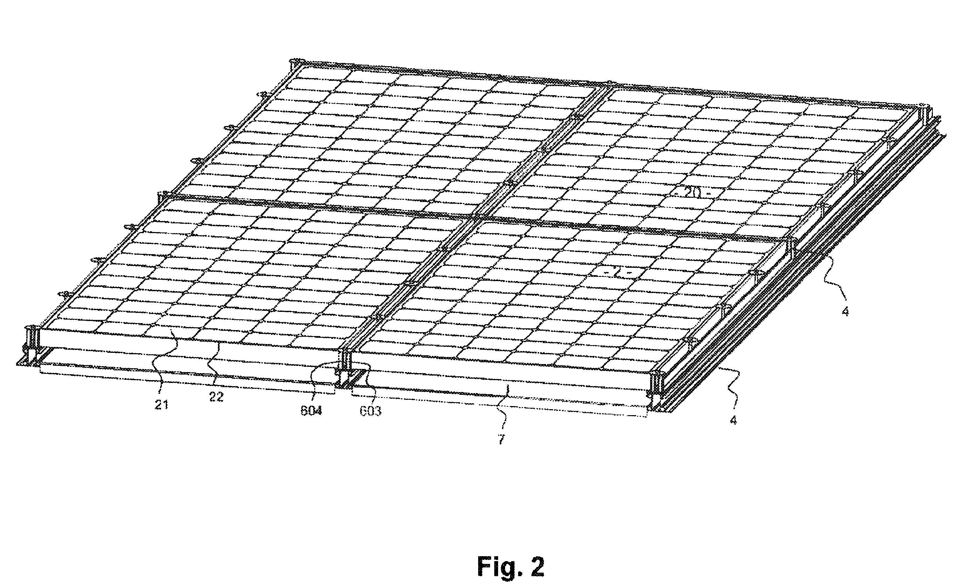

Dans ce mode de réalisation particulier et en référence aux figures 2 à 4, les panneaux **2, 20** sont agencés sur le dispositif **1** de solidarisation de façon coplanaire, de sorte que deux panneaux **2, 20** adjacents d'une même rangée longitudinale ne se chevauchent pas entre eux. En outre, les panneaux **2, 20** sont répartis de part et d'autre des profilés longitudinaux **4,** leurs lisières latérales reposant sur les différentes surfaces d'appui **41.**

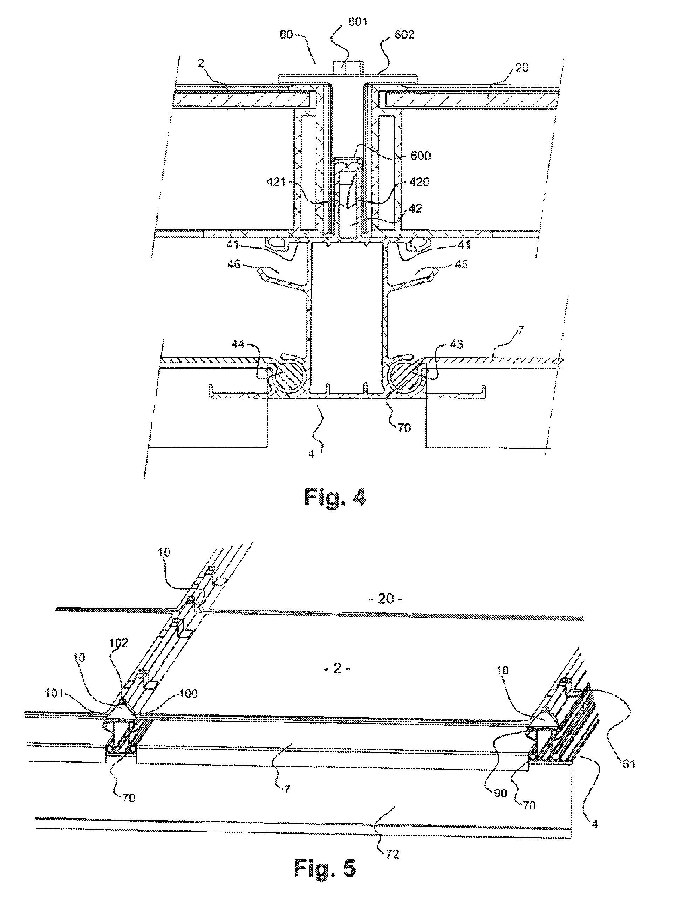

Ces panneaux **2, 20** sont maintenus en position par rapport à la toiture **3** à l'aide de plots **60,** de rondelles **602** et de vis **601.** Chaque plot est muni d'une encoche **600** de forme complémentaire à la section supérieure **42** et est disposé à cheval sur ladite section supérieure **42** par l'intermédiaire de cette encoche **600.** Comme illustré sur la figure 2, les plots **60** sont répartis le long des profilés longitudinaux **4,** et chaque panneau **2, 20** peut être maintenu par une pluralité de plots **60** coopérant avec des rondelles **602** et des vis **601.** Chaque lisière latérale des panneaux **2, 20** se retrouve ainsi en sandwich entre une surface d'appui **41** et des rondelles **602.** Tel qu'illustré en figure 4, les sections supérieures **42** et les plots **60** sont munis d'orifices traversants coopérant avec les vis **601** pour maintenir les plots **60** solidaires des profilés longitudinaux **4.** En outre, l'ensemble plots **60,** vis **601** et rondelles **602** permet d'empêcher le soulèvement des lisières des panneaux **2, 20.**

Certains des plots **60** comportent en outre des surfaces transversales d'arrêt **603, 604** réparties de part et d'autre de l'encoche **600.** Ces plots **60** sont disposés sur les profilés longitudinaux **4** de sorte que leurs surfaces d'arrêt **603, 604** servent de butée aux lisières inférieures des panneaux **2, 20,** empêchant ainsi tout glissement longitudinal de ces panneaux **2, 20.**

Dans ce mode de réalisation particulier, l'étanchéité est assurée à l'aide de membranes d'étanchéité **7** agencées entre les profilés longitudinaux **4.** Plus précisément, chacune des membranes d'étanchéité **7** est disposée entre deux profilés longitudinaux **4** et s'étend en regard d'une rangée longitudinale de panneaux **2, 20.** En outre, chaque membrane **7** comporte au niveau de ses lisières latérales des moyens d'accrochage **70** qui coopère avec les goulottes **43, 44** pour maintenir la membrane **7** tendue, et ainsi protéger la toiture **3,** outre remplir éventuellement les fonctions de protection contre le feu, outre de résistance mécanique contre la chute des opérateurs. Par exemple, les moyens d'accrochage **70** sont de type baguettes de forme complémentaire aux goulottes **43, 44,** et introduites dans lesdites goulottes **43, 44** par coulissement. Par ailleurs, les lisières supérieure et inférieure de chacune de ces membranes **7** peuvent être rabattues sur une éventuelle toile de rive **72** pour assurer une étanchéité supplémentaire.

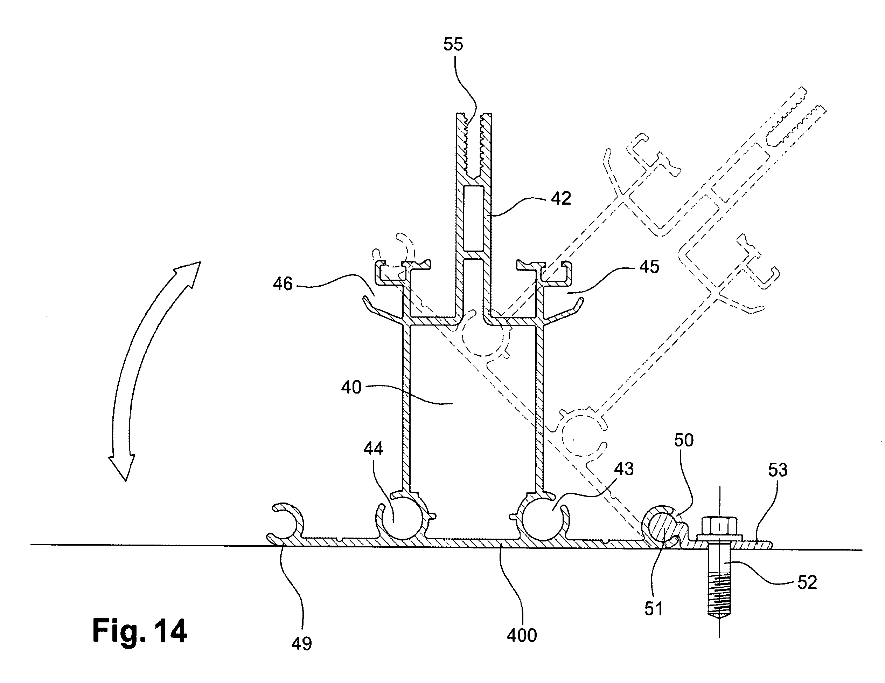

Selon un mode particulier de réalisation de l'invention, plus particulièrement décrit en relation avec les figures 14 à 17, on munit le dispositif de moyens aptes à favoriser et faciliter la tension de la membrane **7**.

A cet effet, la base **400** des profilés **4** est munie de part et d'autre de la section inférieure de goulottes **49, 50** s'étendant selon toute la longueur du profilé. Ces goulottes, à l'instar des goulottes **43, 44** présentent un profil en C dirigé vers l'extérieur du profilé.

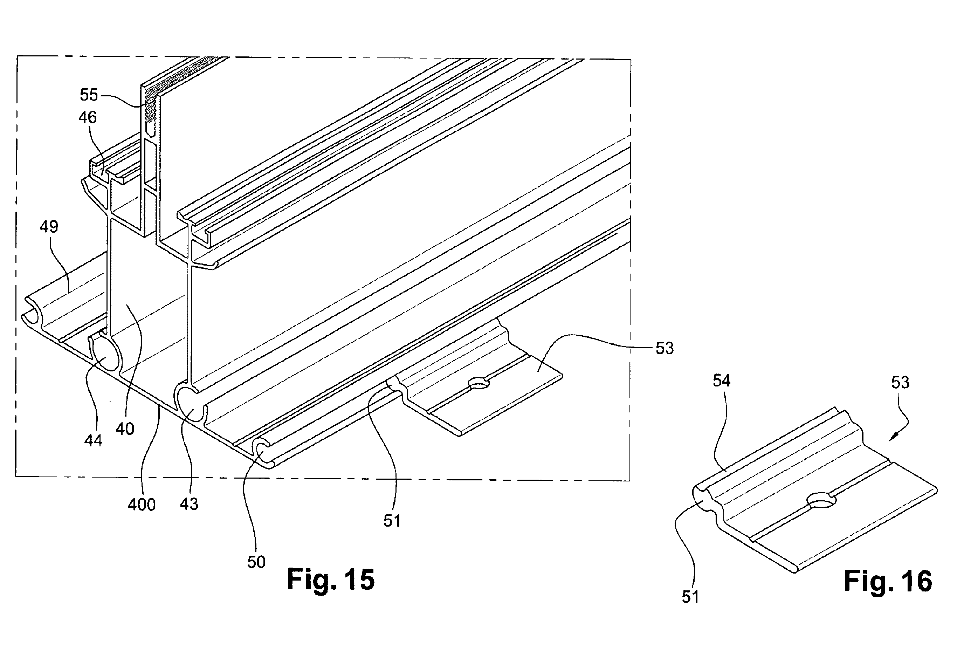

Elles sont destinées à coopérer avec un jonc **51,** ou plus précisément une portion de jonc, de section sensiblement circulaire, fixée sur la toiture par le biais de l'organe de fixation, également dénommé « crapaud » **53** dans le domaine considéré, ce dernier étant fixé à la toiture au moyen d'une vis **52.** Ce crapaud **53** est illustré en figure 16. On peut observer que la portion de jonc qu'il comporte est en partie tronquée, et ce, dans un souci de faciliter l'introduction de ladite partie de jonc **51** dans la goulotte correspondante **49, 50.** En effet, le méplat **54** résultant de cette troncature réduit localement le diamètre de la partie de jonc **51,** selon une dimension compatible avec la zone ouverte de la goulotte **49, 50.**

Ce faisant, on conçoit la possibilité pour le profilé de basculer par rapport à l'axe d'articulation ainsi défini, et tel que par ailleurs représenté en position basculée en traits discontinus sur la figure 14. De fait, et compte tenu de la longueur du dispositif de l'invention, on met en place plusieurs de ces crapauds **53** le long d'un même dispositif, afin de constituer un véritable axe d'articulation, et faciliter le basculement du profilé par rapport à cet axe.

Ainsi, la mise en place de la membrane **7** s'en trouve grandement facilitée, et sa tension en outre améliorée.

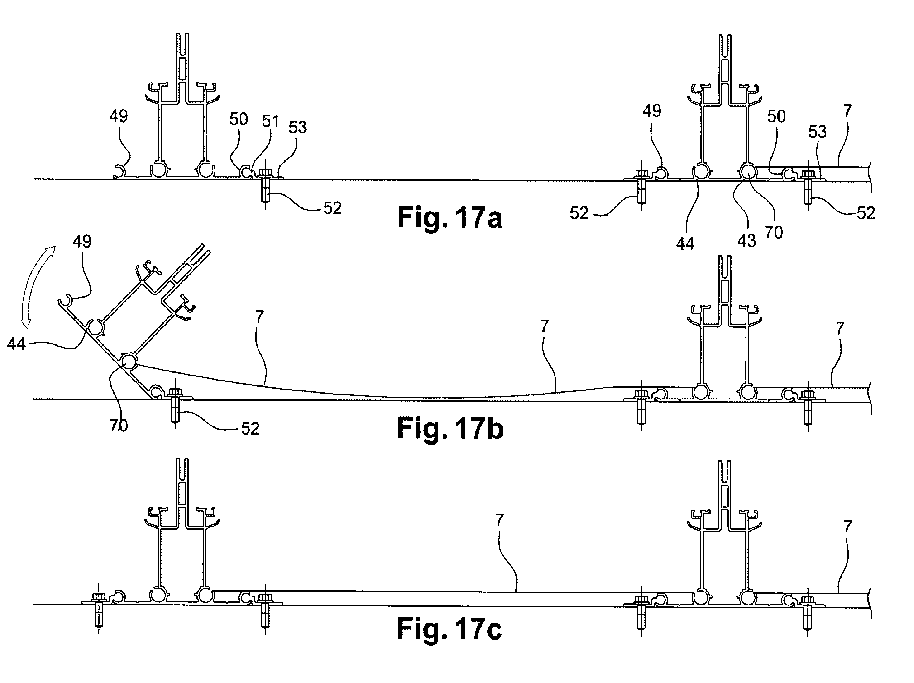

Les figures 17 représentent cette mise en place. En figure 17a, le profilé de gauche n'est provisoirement fixé sur la toiture qu'à l'aide de la goulotte **50.** En revanche, le profilé de droite est solidarisé sur la toiture par ses deux goulottes **49** et **50.**

En figure 17b, le profilé de gauche est en position basculé, afin de favoriser l'insertion du jonc **70** de la membrane **7** dans la goulotte **44 :** la membrane n'est donc pas tendue.

Enfin, en figure 17c, on fait pivoter le profilé de gauche par rapport à l'articulation partie de jonc **51**/goulotte **50,** jusqu'à permettre sa fixation au niveau de son autre goulotte **49.** Ce faisant, on induit la tension de la membrane **7**, qui se trouve alors en position opérationnelle.

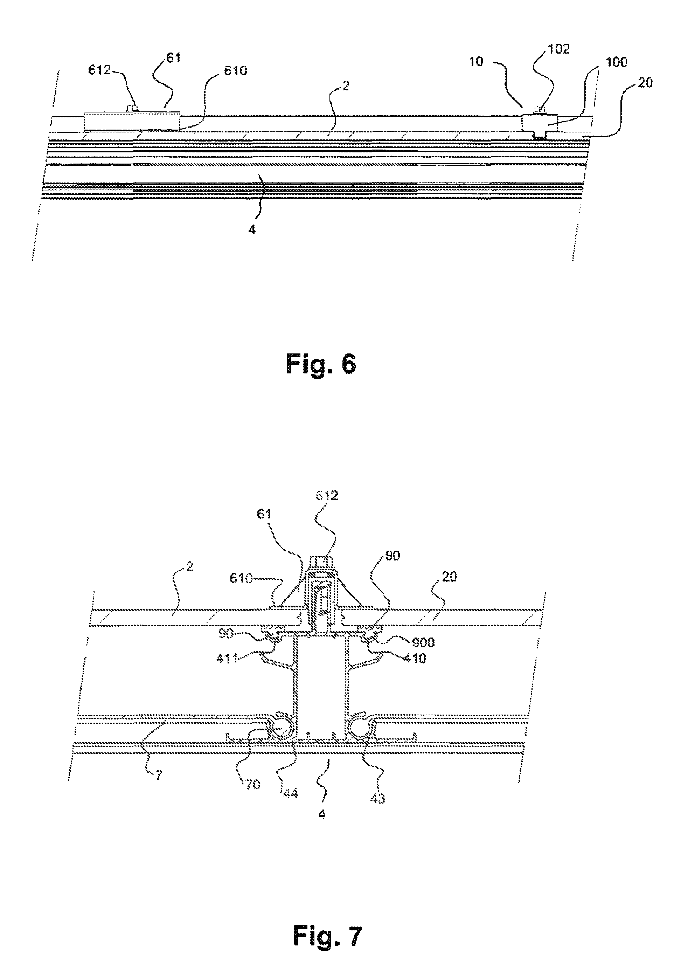

Dans un autre mode de réalisation particulier de l'invention, et en référence aux figures 5 à 7, un joint d'appui **90** est intercalé entre chaque lisière latérale des panneaux **2, 20** et la surface d'appui **41** correspondante. Chaque joint d'appui **90** présente une excroissance **900** longitudinale qui coopère avec une gorge **410, 411** longitudinale de la surface d'appui **41.** La forme de la gorge **410, 411** de la surface d'appui **41** et celle de l'excroissance **900** du joint d'appui **90** sont de préférence complémentaire de sorte que le joint d'appui **41** reste solidarisé au profilé longitudinal **4.**

Dans cet autre mode de réalisation particulier, les panneaux **2, 20** sont agencés sans chevauchement entre eux, et sont maintenus en position par rapport à la toiture **3** à l'aide de cavaliers **61** de forme complémentaire à la section transversale des sections supérieures **42** et disposés à cheval sur ces dernières.

Les cavaliers **61** sont répartis le long des profilés longitudinaux **4.** Chaque cavalier **61** comporte deux pattes **610, 611** latérales de sorte que chaque lisière transversale de chaque panneau **2, 20** se retrouvent en sandwich entre un joint d'appui **41** et une patte **610, 611** d'un ou de plusieurs cavaliers **61.** Chaque cavalier **61** est muni d'un orifice traversant coopérant avec une vis **612** pour maintenir le cavalier solidaire du profilé longitudinal **4,** également muni d'orifices traversants. Cette solidarisation des cavaliers **61** sur les profilés longitudinaux **4** permet en outre d'empêcher tout soulèvement des lisières transversales des panneaux **2, 20** disposées en sandwich entre des pattes **610, 611** et les joints d'appui **90.**

Dans la variante illustrée au sein des figures 14 à 17, la section supérieure **40** du profilé définit un filetage partiel ou tronqué, **55** susceptible de coopérer avec la vis **612** de fixation du cavalier **61.**

Par ailleurs, des sabots de séparation **10** sont disposés à cheval sur la section supérieure **42,** chacun des sabots de séparation **10** présentant des ailettes **100, 101** latérales sur lesquelles viennent buter les lisières inférieures des panneaux **2, 20.** Ainsi, ces ailettes **100, 101** permettent non seulement d'éviter tout glissement longitudinal des panneaux **2, 20** mais permettent également de réaliser une séparation entre deux panneaux **2, 20** adjacents au niveau de leurs lisières supérieure et inférieure respectivement. En outre, les sabots de séparation **10** peuvent être fixés sur les profilés longitudinaux **4** à l'aide de vis **102.**

Par ailleurs, dans cet autre mode de réalisation particulier, l'étanchéité peut être réalisée à l'aide de membranes d'étanchéité **7** telles que celles décrites dans le mode de réalisation précédent.

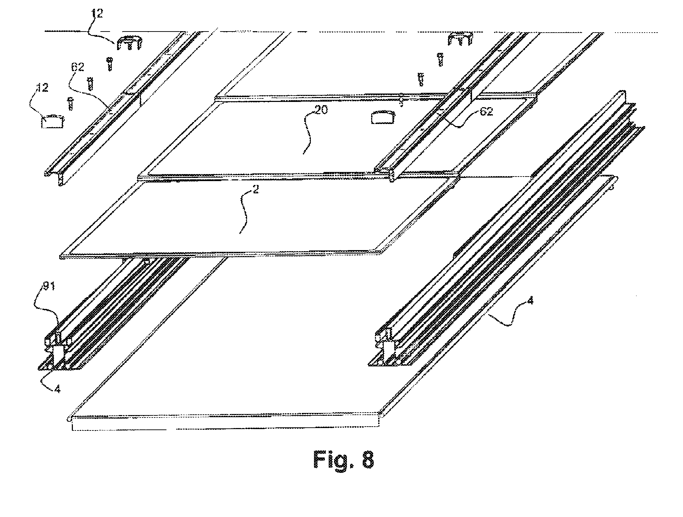

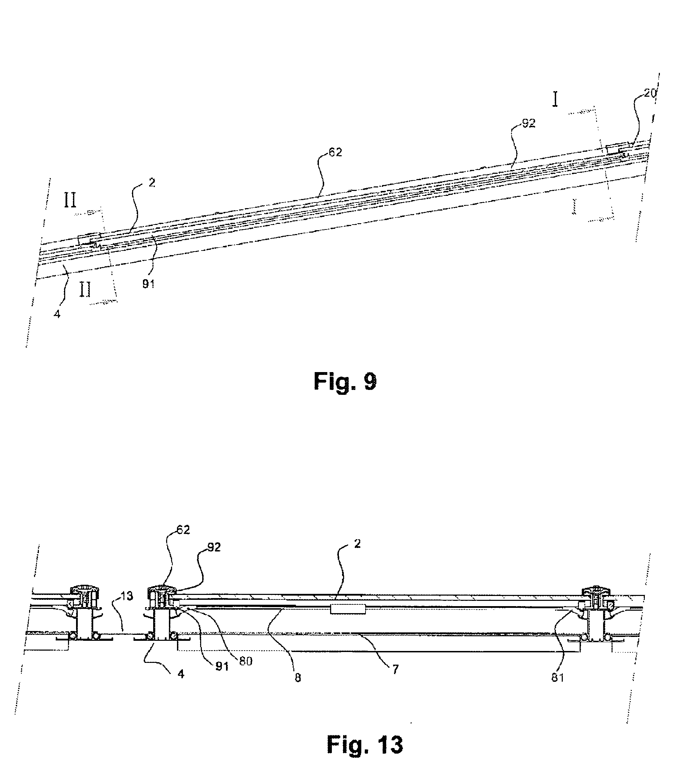

Dans un autre mode de réalisation particulier et en référence aux figures 8 à 13, les panneaux **2, 20** sont agencés entre eux à l'instar des tuiles se chevauchant partiellement. On notera que sur les figures 9 à 13, le profilé longitudinal a été représenté de manière simplifié afin de ne pas alourdir les figures.

Tel que représenté au sein des figures 8 et 9, le dispositif **1** de solidarisation comporte une pluralité de profilés longitudinaux **4** agencés dans le sens de la pente de la toiture **3.**

Le recouvrement partiel entre deux panneaux **2, 20** agencés l'un au dessus de l'autre est obtenu au moyen de joints inférieurs **91** positionnés entre les profilés longitudinaux **4** et les panneaux **2, 20** et présentant chacun une section longitudinale de forme trapézoïdale. Ainsi, la section haute des joints inférieurs **91** présente une hauteur inférieure à celle de la section basse, et cette caractéristique permet de modifier l'inclinaison des panneaux **2, 20** par rapport à la pente de la toiture **3** de façon à réaliser le recouvrement partiel de la lisière supérieure de chaque panneau, par la lisière inférieure du panneau adjacent agencé au dessus du premier panneau considéré. En outre, cet agencement permet à l'eau de ruisseler à la surface des panneaux **2, 20** sans nécessiter des moyens d'étanchéité complexes au niveau de leurs lisières inférieure et supérieure.

Les panneaux **2, 20** sont maintenus en position au niveau de leurs lisières latérales au moyen de profilés de serrage **62** s'étendant au dessus d'une pluralité de panneaux **2, 20** photovoltaïques se chevauchant. Pour ce faire, des joints supérieurs **92** sont agencés entre les panneaux **2, 20** et un profilé de serrage **62** solidarisé aux profilés longitudinaux **4.** Les joints supérieurs **92** présentent chacun une section longitudinale de forme trapézoïdale et une inclinaison égale à celle des joints inférieurs **91,** et sont agencés sur les panneaux **2, 20** avec une orientation opposée à celle des joints inférieurs **91.** Les joints supérieurs **92** permettent donc de rattraper l'inclinaison des panneaux **2, 20** par rapport à l'orientation de la pente de la toiture **3** et de définir une bande plane continue s'étendant au dessus des différents panneaux **2, 20** pour permettre l'utilisation d'un profilé de serrage **62** continu s'étendant sur tout ou partie des panneaux **2, 20** dans le sens de la pente de la toiture **3.** Par ailleurs, cet agencement permet de positionner parallèlement le profilé de serrage **62** par rapport au profilé longitudinal **4** en regard et facilite ainsi leur solidarisation.

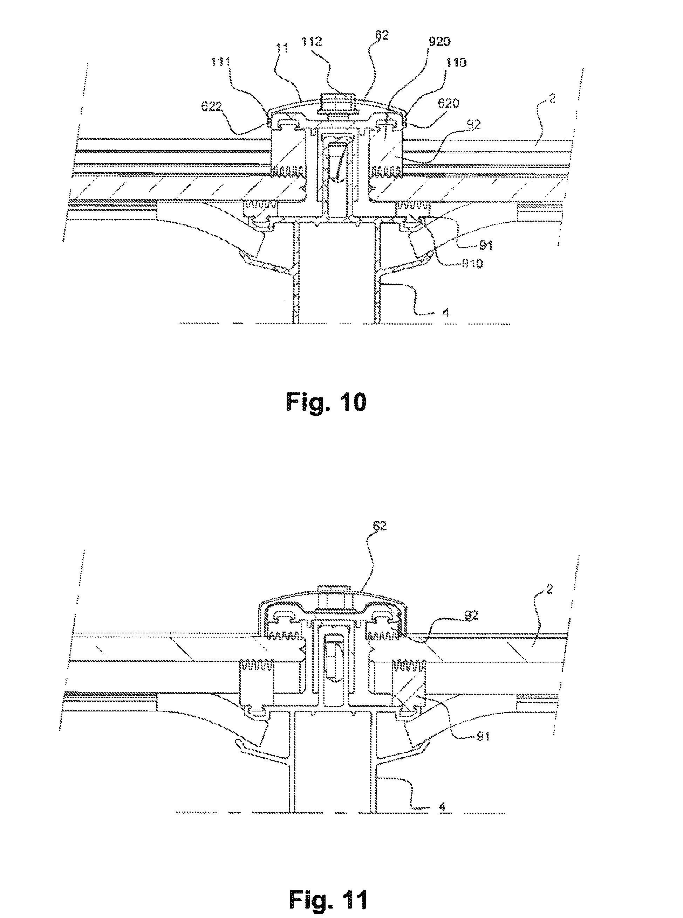

Ainsi, tel que représenté à la figure 10, correspondant à la coupe I - I de la figure 9, c'est-à-dire à proximité d'un point haut d'un panneau **2, 20,** le joint inférieur **91** présente une hauteur minimale tandis que le joint supérieur **92** présente une hauteur maximale. Et tel que représenté à la figure 11, correspondant à la coupe II - II de la figure 9, c'est-à-dire au niveau d'un point bas de solidarisation d'un panneau **2, 20,** le joint inférieur **91** présente une hauteur maximale tandis que le joint supérieur **92** présente une hauteur minimale. De cette manière, on modifie l'inclinaison des panneaux par rapport à la pente de la toiture **3** et on permet le recouvrement partiel des lisières inférieure et supérieure de deux panneaux **2, 20** adjacents agencés l'un au dessus de l'autre.

Les joints inférieurs **91** et supérieurs **92** peuvent en outre présenter une section transversale circulaire et être de forme identique. En outre, ils peuvent comporter une excroissance longitudinale **910, 920** coopérant avec une gorge **620** ménagée dans le profilé de serrage **62** ou dans la surface d'appui **41.** Cet agencement permet notamment de pré-positionner les joints inférieurs et supérieurs **91, 92** sur les profilés longitudinaux **4** et les profilés de serrage **62** en conservant un degré de mobilité dans la direction longitudinale des profilés.

De plus, le dispositif **1** peut comporter un capot **11** longiligne s'étendant au dessus du profilé de serrage **62.** Un tel capot **11** peut permettre de masquer des éléments mécaniques de solidarisation tels que des vis **112.** Ce capot longiligne peut comporter des moyens d'encliquetage **110, 111** coopérant avec une gorge **622** ménagée dans le profilé de serrage **62.** De tels capots **11** longilignes peuvent notamment être réalisés en un alliage d'aluminium.

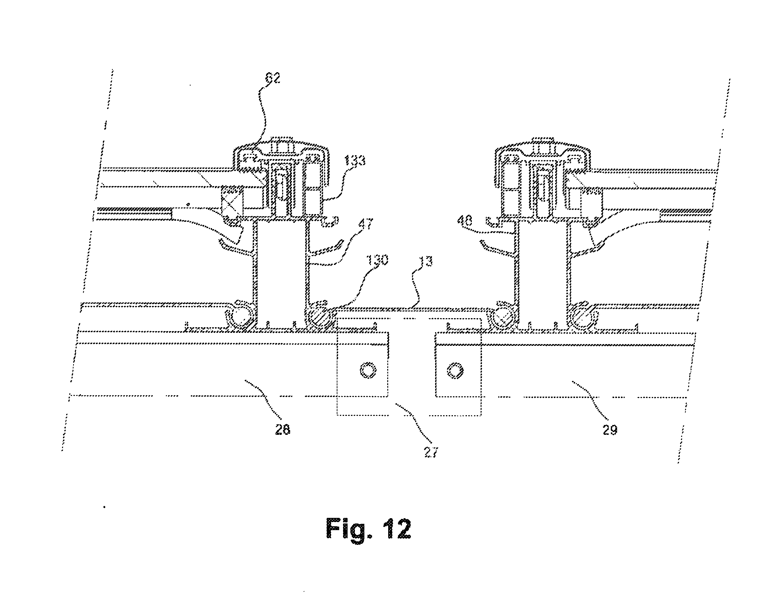

Tel que représenté à la figure 12, le dispositif peut également comporter des membranes souples **13** agencées entre deux profilés longitudinaux **47, 48** en regard d'un joint de dilatation **27** séparant deux éléments **28, 29** de la toiture **3.** Une telle membrane souple **13** comporte, au niveau de ses lisières, des joncs **130** qui peuvent coopérer avec les goulottes **43, 44** des profilés longitudinaux. Ainsi, on insère la membrane souple **13** dans les goulottes **43, 44** en procédant à son coulissement selon la direction des profilés longitudinaux **4.**

Tel qu'illustrée sur la figure 13, l'étanchéité du dispositif peut être renforcée à l'aide de membranes **7** comme dans les modes de réalisation précédent et ne seront pas à nouveau décrites ici.

Par ailleurs, tel qu'illustré sur cette même figure 13, des joints **8** peuvent être disposées sous les panneaux **2, 20.** Ces joints **8** présentent des lisières latérales à partir desquelles s'étendent des lèvres **80, 81** longitudinales. L'extrémité libre de chacune des lèvres **80, 81** s'étend à l'intérieur de l'une des rigoles **45, 46** d'un profilé longitudinal **4** afin de guider d'éventuel condensat dans ladite rigole **45, 46.**

Il ressort de ce qui précède qu'un dispositif conforme à l'invention présente de nombreux avantages et notamment :
- il est utilisable pour des panneaux agencés en clin ou non ;
- il garantit une étanchéité optimale pour la toiture;
- il garantit une étanchéité optimale au niveau de la jonction entre deux lisières inférieure et supérieure de deux panneaux adjacents agencés l'un au dessus de l'autre;
- il permet de conserver un effet visuel plan de la toiture;
   - il permet de s'adapter aux variations dimensionnelles d'une toiture comportant des joints de dilatation;
   - il garantit la sécurité des opérateurs et des usagers ;
   - il peut conférer des propriétés non feu à l'ensemble de la couverture.

## Revendications

1. Dispositif (1) de solidarisation de panneaux, notamment photovoltaïques (2, 20) avec une toiture (3) de bâtiment, ledit dispositif (1) comprenant au moins :
- des profilés longitudinaux (4) solidarisés à la toiture (3) et agencés dans le sens de la pente de la toiture (3) présentant au moins ;
• une section inférieure (40) solidarisée à la toiture (3), et supportant une surface d'appui (41) des lisières latérales des panneaux (2, 20) ;
• une section supérieure (42) dont les parois longitudinales (420, 421) s'étendent au dessus de la surface d'appui (41), et sont aptes à empêcher tout glissement latéral des panneaux (2, 20) ; et
• deux goulottes (43, 44) longitudinales disposées latéralement de part et d'autre de la section inférieure (40), chacune des deux goulottes supportant une rigole (45, 46) longitudinale destinée à la récupération de condensat ;
- des moyens de serrage (60, 61, 62) aptes à maintenir en position les lisières latérales des panneaux (2, 20) par rapport à la toiture (3) ;
***caractérisé* en ce qu'**il comprend en outre des membranes (7), chacune des membranes (7) étant agencée entre deux profilés longitudinaux (4) adjacents et s'étendant en regard d'une rangée longitudinale de panneaux (2, 2), les membranes (7) comportant au niveau de leurs lisières longitudinales des moyens d'accrochage (70) coopérant avec les goulottes (43, 44) longitudinales, lesdits moyens d'accrochage (70) étant constitués de baguettes de forme complémentaire aux goulottes (43, 44), et introduites dans lesdites goulottes (43, 44) par coulissement.

2. Dispositif selon la revendication 1, ***caractérisé* en ce qu'**il est solidarisé à la toiture par l'intermédiaire d'une base (400), munie de goulottes latérales (49, 50), aptes à coopérer avec une partie de jonc (51) solidarisée à ladite toiture par un organe de fixation (53).

3. Dispositif selon l'une des revendications 1 et 2, ***caractérisé* en ce qu'**il comprend en outre des joints (8) disposées sous les panneaux (2, 20), et des lèvres (80, 81) longitudinales s'étendant depuis les lisières longitudinales des joints (8) jusqu'à l'intérieur des rigoles (45, 46) longitudinales afin de guider le condensat dans lesdites rigoles (45, 46).

4. Dispositif selon l'une des revendications 1 à 3, ***caractérisé* en ce que** la surface d'appui (41) de la section inférieure (40) est munie de gorges (410, 411) longitudinales aptes à coopérer avec des éléments intermédiaires d'appui (90, 91).

5. Dispositif selon l'une des revendications 1 à 4, ***caractérisé* en ce que** chacun des moyens de serrage comprend au moins un plot (60) muni d'une encoche (600) disposée à cheval sur le profilé supérieur (40), ledit plot (60) étant en outre muni d'un orifice traversant coopérant avec une rondelle (602) et une vis (601) pour éviter le soulèvement des lisières des panneaux (2, 20).

6. Dispositif selon la revendication 5, ***caractérisé* en ce que** certains des plots (60) comportent deux surfaces transversales d'arrêt (603, 604) de part et d'autre de l'encoche (600), lesdites surfaces d'arrêt (603, 604) étant aptes à supporter les lisières transversales inférieures des panneaux (2, 20) pour éviter tout glissement longitudinal de ces panneaux (2, 20).

7. Dispositif selon l'une des revendications 1 à 4, ***caractérisé* en ce qu'**il comprend en outre des joints d'appui (90) formant éléments intermédiaires d'appui, disposés entre les panneaux (2, 20) et les gorges (410, 411) longitudinales de la surface d'appui (41), chacun des joints d'appui (90) présentant une excroissance (900) longitudinale coopérant avec l'une desdites gorges (410, 411) longitudinales de la surface d'appui (41).

8. Dispositif selon la revendication 7, ***caractérisé* en ce qu'**il comprend des cavaliers (61) formant moyens de serrage, de forme complémentaire à la section latérale de la section supérieure (42), et disposés à cheval sur les sections supérieures (42), chacun des cavaliers (61) présentant deux pattes (610, 611) latérales de maintien de deux panneaux (2, 20) adjacents disposés de part et d'autre du profilé longitudinal (4), et présentant en outre un orifice traversant coopérant avec une vis (612) de manière à solidariser le cavalier (61) sur la section supérieure (42).

9. Dispositif selon l'une des revendications 7 ou 8, ***caractérisé* en ce qu'**il comprend en outre des sabots de séparation (10) disposés à cheval sur le profilé supérieur (42) et présentant des ailettes (100, 101) latérales sur laquelle vient buter les lisières inférieures des panneaux (2, 20).

10. Dispositif selon l'une des revendications 1 à 4, ***caractérisé* en ce qu'**il comprend en outre des joints inférieurs (91) positionnés entre les profilés longitudinaux (4) et les panneaux (2, 20), et présentant chacun une section longitudinale de forme trapézoïdale, ces joints inférieurs (91) permettant de réaliser un recouvrement partiel des panneaux (2, 20) entre eux dans le sens de la pente de la toiture (3).

11. Dispositif selon la revendication 10, ***caractérisé* en ce qu'**il comprend en outre des joints supérieurs (92) présentant chacun une section longitudinale de forme trapézoïdale et une inclinaison égale à celle des joints inférieurs (91), les joints supérieurs (92) étant positionnés entre les panneaux (2, 20) et des profilés de serrage (62) formant moyens de serrage, et étant agencés sur les panneaux (2, 20) avec une orientation opposée à celle des joints inférieurs (91) afin de permettre l'utilisation des profilés de serrage (62) de forme plane pour maintenir en position deux panneaux (2, 20) adjacents agencés l'un en dessous de l'autre.

12. Dispositif selon l'une des revendications 10 et 11, ***caractérisé* en ce que** les joints inférieurs et/ou supérieurs (91, 92) présentent chacun une excroissance (910, 920) longitudinale coopérant avec les gorges (410, 411) longitudinales ménagées dans la surface d'appui (41) et/ou avec des gorges (622) de forme complémentaire ménagée dans les profilés de serrage (62).

13. Dispositif selon l'une des revendications 10 à 12, ***caractérisé* en ce qu'**il comprend en outre des capots longilignes (11) destinés à masquer des éléments mécaniques de solidarisation des profilés de serrage (62) avec les profilés longitudinaux (4).

14. Dispositif selon la revendication 13, ***caractérisé* en ce que** les capots longilignes (11) comportent chacun des moyens d'encliquetage (110, 111) coopérant avec une gorge (622) ménagée dans les profilés de serrage (62).

15. Dispositif selon l'une des revendications 10 à 14, ***caractérisé* en ce qu'**il comprend en outre des membranes souples (13) agencées entre deux profilés longitudinaux adjacents (47, 48), et en regard d'un joint de dilation (27) séparant deux éléments (28, 29) de la toiture (3) sur laquelle le dispositif (1) est rapporté.

16. Dispositif selon la revendication 15, ***caractérisé* en ce que** chaque membrane souple (13) comporte au niveau de chacune de ses lisières longitudinales un jonc (130) coopérant avec la goulotte (43, 44) ménagée ai sein des profilés longitudinaux (4).

## Claims

1. Panel binding device (1), especially suitable for binding photovoltaic panels (2,20) with the roof (3) of a building, said device (1) comprising at least:
- Longitudinal profiles (4) bound to the roof (3) and arranged along the slope of the roof (3), said profiles displaying at least :
■ a lower section (40) bound to the roof (3), and holding up a supporting surface (41), supporting the lateral edges of the panels (2,10) ;
■ an upper section (42) whose longitudinal walls (420, 421) extend above the supporting surface (41), and are capable of preventing any lateral slipping of the panels (2, 20), and ;
■ two longitudinal gutters (43, 44) laterally placed on either side of the lower section (40), each of the two gutters holding up a longitudinal channel (45, 46) intended for the recovery of condensates ;
- tightening means (60, 61, 62) capable of holding the lateral edges of the panels (2, 20) in position with respect to the roof (3) ;
**characterized in that** it further comprises membranes (7), each of said membranes (7) being arranged between two adjacent longitudinal profiles (4) and extending opposite a longitudinal row of panels (2, 20), said membranes (7) comprising hanging means (70) at their longitudinal edges that cooperate with said longitudinal gutters (43, 44), said hanging means (70) consisting of sticks whose shapes are complementary to those of said gutters (43, 44), said sticks being introduced into said gutters (43, 44) by sliding.

2. Device according to claim 1, **characterized in that** it is bound to the roof (3) via a base (400), provided with lateral gutters (49, 50) capable of cooperating with part of a ring (51), said part being bound to said roof with a fastener (53).

3. Device according to claims 1 or 2, **characterized in that** it further comprises joints (8) placed under the panels (2, 20) and longitudinal rims (80; 81) extending from the longitudinal edges of the joints (8) to the inside of the longitudinal channels (45, 46) in order to guide the condensate inside said channels (45, 46).

4. Device according to any of claims 1 to 3, **characterized in that** the supporting surface (41) of the lower section (40) is provided with longitudinal grooves (410, 411) capable of cooperating with intermediate supporting elements (90, 91).

5. Device according to any of claims 1 to 4, **characterized in that** each of the tightening means comprises at least one block (60) provided with a notch (600) located on top of the upper profile (40), said block (60) being further provided with a through bore cooperating with a washer (602) and a screw (601) to prevent the edges of the panels (2, 20) from lifting up.

6. Device according to claim 5, **characterized in that** some blocks (60) comprise two transversal stopping surfaces (603, 604) on either side of the notch (600), said stopping surfaces (603, 604) being capable of holding up the lower transversal edges of the panels (2, 20) in order to prevent any longitudinal slipping of these panels (2, 20).

7. Device according to any of claims 1 to 4, **characterized in that** it further comprises supporting joints (90) forming intermediate supporting elements, positioned between the panels (2, 20) and the longitudinal grooves (410, 411) of the supporting surface (41), each of said supporting joints (90) displaying a longitudinal protrusion (900) cooperating with one of said longitudinal grooves (410, 411) of the supporting surface (41).

8. Device according to claim 7, charaterized in that it comprises staples (61) forming tightening means, having a shape complementary to that of the lateral section of the upper section (42), and positioned on top of the upper sections (42), each of the staples (61) displaying two lateral straps (610, 611) to hold two adjacent panels (2, 20) positioned on either side of the longitudinal profile (4), and further displaying a through bore cooperating with a screw (612) in order to bind the staple (61) onto the upper section (42).

9. Device according to any of claims 7 or 8, **characterized in that** it further comprises separating wedges (10) positioned on top of the upper profile (42) and displaying lateral fins (100, 101) on which the lower edges of the panels (2, 20) abut.

10. Device according to any of claims 1 to 4, **characterized in that** it further comprises lower joints (91) positioned between the longitudinal profiles (4) and the panels (2, 20), and each displaying a longitudinal trapezoid-shaped section, these lower joints (91) allowing a partial overlap of the panels (2, 20) along the slope of the roof (3).

11. Device according to claim 10, **characterized in that** it further comprises upper joints (92) each displaying a longitudinal trapezoid-shaped section and a tilt equal to that of the lower joints (91), said upper joints (92) being positioned between the panels (2, 20) and the tightening profiles (62) forming tightening means, and being arranged on the panels (2, 20) with an orientation opposite to that of the lower joints (91) in order to allow using the plane-surfaced tightening profiles (62) to hold two adjacent panels (2, 20) in position, said panels (2, 20) being arranged one on top of the other.

12. Device according to claim 10 or 11, **characterized in that** the lower and/or upper joints (91, 92) each display a longitudinal protrusion (910, 920) cooperating with the longitudinal grooves (410, 411) made in the supporting surface (41) and/or with grooves (622) possessing complementary shapes made in the tightening profiles (62).

13. Device according to any of claims 10 to 12, **characterized in that** it further comprises rangy hoods (11) in order to mask mecanical elements of the tightening profiles (62) binding the latter to the longitudinal profiles (4).

14. Device according to claim 13, **characterized in that** the rangy hoods (11) each comprise snapping means (110, 111) cooperating with a groove (62) made in the tightening profiles (62).

15. Device according to any of claims 10 to 14, **characterized in that** it further comprises flexible membranes (13) arranged between two adjacent longitudinal profiles (47, 48), and opposite an expansion joint (27) separating two elements (28, 29) of the roof (3) onto which the device (1) is placed.

16. Device according to claim 15, **characterized in that** each of the flexible membranes (13) comprises at each of its longitudinal edges a ring (130) cooperating with the gutter (43, 44) carved inside the longitudinal profiles (4).

## Patentansprüche

1. Vorrichtung (1) zur festen Verbindung von insbesondere fotovoltaischen Platten (2, 20) mit einem Gebäudedach (3), wobei die Vorrichtung (1) mindestens umfasst:
- Längsprofile (4), die am Dach (3) befestigt und in der Richtung der Schräge des Dachs (3) angeordnet sind und mindestens aufweisen:
• einen unteren Abschnitt (40), der am Dach (3) befestigt ist und eine Auflagefläche (41) für Seitenleisten der Platten (2, 20) trägt;
• einen oberen Abschnitt (42), dessen Längswände (420, 421) sich über der Auflagefläche (41) erstrecken und in der Lage sind, jegliche seitliche Verschiebung der Platten (2, 20) zu verhindern; und
• zwei längs verlaufende Hohlkehlen (43, 44), die seitlich auf beiden Seiten des unteren Abschnitts (40) vorgesehen sind, wobei jede der beiden Hohlkehlen eine längs verlaufende Abflussrinne (45, 46) trägt, die dazu bestimmt ist, Kondensat aufzufangen;
- Klemmeinrichtungen (60, 61, 62), die in der Lage sind, die Seitenleisten der Platten (2, 20) in Bezug auf das Dach (3) an Ort und Stelle zu halten;
**dadurch gekennzeichnet, dass** sie darüber hinaus Membranen (7) umfasst, wobei jede der Membranen (7) zwischen zwei benachbarten Längsprofilen (4) angeordnet ist und sich gegenüber einer längs verlaufenden Reihe von Platten (2, 20) erstreckt, wobei die Membranen (7) im Bereich ihrer längs verlaufenden Leisten Einhakeinrichtungen (70) umfassen, die mit den längs verlaufenden Hohlkehlen (43, 44) zusammenwirken, wobei die Einhakeinrichtungen (70) aus Stäben mit zu den Hohlkehlen (43, 44) komplementärer Form bestehen und durch Einschieben in die Hohlkehlen (43, 44) eingeführt werden.

2. Vorrichtung nach Anspruch 1, **dadurch gekennzeichnet, dass** sie mittels einer Grundplatte (400) am Dach befestigt ist, die mit seitlichen Hohlkehlen (49, 50) ausgestattet ist, die in der Lage sind, mit einem Stabteil (51) zusammenzuwirken, das mit einem Befestigungselement (53) am Dach befestigt ist.

3. Vorrichtung nach einem der Ansprüche 1 und 2, **dadurch gekennzeichnet, dass** sie darüber hinaus Verbindungen (8), die unter den Platten (2, 20) vorgesehen sind, und Längslippen (80, 81) umfasst, die sich ausgehend von den längs verlaufenden Leisten der Verbindungen (8) bis in das Innere der längs verlaufenden Abflussrinnen (45, 46) erstrecken, um das Kondensat in die Abflussrinnen (45, 46) zu leiten.

4. Vorrichtung nach einem der Ansprüche 1 bis 3, **dadurch gekennzeichnet, dass** die Auflagefläche (41) des unteren Abschnitts (40) mit längs verlaufenden Kehlen (410, 411) versehen ist, die in der Lage sind, mit Auflagezwischenelementen (90, 91) zusammenzuwirken.

5. Vorrichtung nach einem der Ansprüche 1 bis 4, **dadurch gekennzeichnet, dass** jede der Klemmeinrichtungen mindestens ein Kontaktstück (60) umfasst, das mit einer Aussparung (600) versehen ist, die auf dem oberen Profil (40) aufsitzend vorgesehen ist, wobei das Kontaktstück (60) darüber hinaus mit einer Durchgangsöffnung versehen ist, die mit einer Unterlegscheibe (602) und einer Schraube (601) zusammenwirkt, um ein Abheben der Leisten der Platten (2, 20) zu verhindern.

6. Vorrichtung nach Anspruch 5, **dadurch gekennzeichnet, dass** manche der Kontaktstücke (60) zwei quer verlaufende Anschlagflächen (603, 604) auf beiden Seiten der Aussparung (600) umfassen, wobei die Anschlagflächen (603, 604) in der Lage sind, die unteren Querleisten der Platten (2, 20) zu tragen, um jegliche Querverschiebung dieser Platten (2, 20) zu verhindern.

7. Vorrichtung nach einem der Ansprüche 1 bis 4, **dadurch gekennzeichnet, dass** sie darüber hinaus Auflagezwischenelemente bildende Auflageverbindungen (90) umfasst, die zwischen den Platten (2, 20) und den Längskehlen (410, 411) der Auflagefläche (41) vorgesehen sind, wobei jede der Auflageverbindungen (90) eine Längsausstülpung (900) aufweist, die mit einer der Längskehlen (410, 411) der Auflagefläche (41) zusammenwirkt.

8. Vorrichtung nach Anspruch 7, **dadurch gekennzeichnet, dass** sie Klemmeinrichtungen bildende Krampen (61) mit zum seitlichen Abschnitt des oberen Abschnitts (42) komplementärer Form umfasst, und die auf den oberen Abschnitten (42) aufsitzend vorgesehen sind, wobei jede der Krampen (61) zwei seitliche Haltebügel (610, 611) für zwei auf beiden Seiten des Längsprofils (4) vorgesehene benachbarte Platten (2, 20) aufweist, und darüber hinaus eine Durchgangsöffnung aufweist, die mit einer Schraube (612) zusammenwirkt, um die Krampe (61) auf dem oberen Abschnitt (42) zu befestigen.

9. Vorrichtung nach einem der Ansprüche 7 oder 8, **dadurch gekennzeichnet, dass** sie darüber hinaus Trennschuhe (10) umfasst, die auf dem oberen Profil (42) aufsitzend vorgesehen sind und Seitenflügel (100, 101) aufweisen, auf denen die unteren Leisten der Platten (2, 20) in Anlage kommen.

10. Vorrichtung nach einem der Ansprüche 1 bis 4, **dadurch gekennzeichnet, dass** sie darüber hinaus untere Verbindungen (91) umfasst, die zwischen den Längsprofilen (4) und den Platten (2, 20) angeordnet sind und jeweils einen längs verlaufenden Abschnitt mit Trapezform aufweisen, wobei es diese unteren Verbindungen (91) ermöglichen, eine Teilabdeckung der Platten (2, 20) untereinander in der Richtung der Schräge des Dachs (3) herzustellen.

11. Vorrichtung nach Anspruch 10, **dadurch gekennzeichnet, dass** sie darüber hinaus obere Verbindungen (92) umfasst, die jeweils einen längs verlaufenden Abschnitt mit Trapezform und eine Neigung gleich derer der unteren Verbindungen (91) aufweisen, wobei die oberen Verbindungen (91) zwischen den Platten (2, 20) und Klemmeinrichtungen bildenden Klemmprofilen (62) angeordnet sind, und auf den Platten (2, 20) mit einer zu derjenigen der unteren Verbindungen (91) entgegengesetzten Ausrichtung angeordnet sind, um die Verwendung von Klemmprofilen (62) mit planer Form zu ermöglichen, um zwei benachbarte Platten (2, 20), die übereinander angeordnet sind, an Ort und Stelle zu halten.

12. Vorrichtung nach einem der Ansprüche 10 und 11, **dadurch gekennzeichnet, dass** die unteren und/oder oberen Verbindungen (91, 92) jeweils eine Längsausstülpung (910, 920) aufweisen, die mit den längs verlaufenden Kehlen (410, 411), die in der Auflagefläche (41) ausgebildet sind, und/oder den Kehlen (622) mit komplementärer Form, die in den Klemmprofilen (62) ausgebildet sind, zusammenwirkt.

13. Vorrichtung nach einem der Ansprüche 10 bis 12, **dadurch gekennzeichnet, dass** sie darüber hinaus längliche Abdeckkappen (11) umfasst, die dazu bestimmt sind, mechanische Befestigungselemente der Klemmprofile (62) mit den Längsprofilen (4) abzudecken.

14. Vorrichtung nach Anspruch 13, **dadurch gekennzeichnet, dass** die länglichen Abdeckkappen (11) jeweils Einrasteinrichtungen (110, 111) umfassen, die mit einer in den Klemmprofilen (62) ausgebildeten Kehle (622) zusammenwirken.

15. Vorrichtung nach einem der Ansprüche 10 bis 14, **dadurch gekennzeichnet, dass** sie darüber hinaus flexible Membranen (13) umfasst, die zwischen zwei benachbarten Längsprofilen (47, 48) und gegenüber einer Dehnungsfuge (27) angeordnet sind, die zwei Elemente (28, 29) des Dachs (3) trennt, auf dem die Vorrichtung (1) angebracht ist.

16. Vorrichtung nach Anspruch 15, **dadurch gekennzeichnet, dass** jede flexible Membran (13) im Bereich jeder ihrer Längsleisten eine Stange (130) umfasst, die mit der im Inneren der Längsprofile (4) ausgebildeten Hohlkehle (43, 44) zusammenwirkt.
